# EUROPÄISCHE PATENTSCHRIFT

(11) **EP 3 107 794 B1**
(45) Veröffentlichungstag und Bekanntmachung des Hinweises auf die Patenterteilung: **11.04.2018**
(21) Anmeldenummer: 15703224.4
(22) Anmeldetag: 07.02.2015
(51) Int. Cl.: B62D 1/20

(54) **KRAFTFAHRZEUGLENKUNG UND MONTAGEVERFAHREN FÜR EINE KRAFTFAHRZEUGLENKUNG**
MOTOR VEHICLE STEERING SYSTEM AND INSTALLATION METHOD FOR A MOTOR VEHICLE STEERING SYSTEM
DIRECTION DE VÉHICULE AUTOMOBILE ET PROCÉDÉ DE MONTAGE D'UNE DIRECTION DE VÉHICULE AUTOMOBILE

(30) Priorität: 22.02.2014 DE 102014002519
(43) Veröffentlichungstag der Anmeldung: 28.12.2016
(73) Patentinhaber: Daimler AG, 70327 Stuttgart (DE)
(72) Erfinder: HEBENSTREIT, Axel, 70569 Stuttgart (DE); LÖFFLER, Hans-Dieter, 72766 Reutlingen (DE); MEYER, Thorsten, 72218 Wildberg (DE); SCHWIEGER, Marco, 21147 Hamburg (DE)
(74) Vertreter: JENSEN & SON
(86) Internationale Anmeldenummer: PCT/EP2015/000258
(87) Internationale Veröffentlichungsnummer: WO 2015/124268

(56) Entgegenhaltungen:
- DE-A1-102008 006 497
- DE-A1-102011 109 691
- DE-A1-102011 109 705

## Beschreibung

Die Erfindung betrifft eine Kraftfahrzeuglenkung und ein Montageverfahren für eine Kraftfahrzeuglenkung.

Die bislang durchgeführte Direktverschraubung der Lenkspindelbauteile miteinander im Motorraum ist im Packageumfeld aus Abgasanlage, Katalysatoren, Motor und Leitungen nur mit erheblichem Aufwand möglich. Dabei wird das eine Spindelbauteil mit dem anderen Spindelbauteil, das im Falle, dass es am Ende des Lenkspindelstranges angeordnet ist, auch als Lenkungskupplung bezeichnet wird, quer zur Lenkspindelrichtung verschraubt. Damit ergibt sich bei Fahrzeugen mit Frontmotor eine äußerst schlechte Zugänglichkeit der zu verbindenden Komponenten und die Variantenanzahl der Anordnungen bei Optimierung der Zugänglichkeit für unterschiedliche Motorvarianten und Lenkungsanlagen, etwa Links- und Rechtslenkermodelle erhöht sich stark. Zusätzlich können Standardmontagereihenfolgen, wie etwa der Zeitpunkt der Montage der Abgasanlage kaum oder gar nicht eingehalten werden.

Die DE 10 2008 006 497 A1 beschreibt in Bezug auf den unabhängigen Anspruch 9 Montageanordnung zum Verbinden eines oberen Lenkspindelbauteils mit der Lenkungskupplung. Das Endstück des Lenkspindelbauteils wird in einen endseitigen Aufnahmebereich der Lenkungskupplung eingeführt, wobei die Montageanordnung eine Vorrichtung umfasst, damit das Lenkspindelbauteil und die Lenkungskupplung koaxial ausgerichtet werden können. Dazu weist das Lenkspindelbauteil dort ein endseitiges Hakenelement auf, in das eine Zugbandschlaufe, die aus dem endseitigen Aufnahmebereich der Lenkungskupplung herausragt, vor der Hochzeit des Motors mit der Karosserie eingehängt wird. Die beiden Lenkungsbauteile (Lenkspindel und Lenkungskupplung) werden mittels des Zugbandes aufeinander zu gezogen und ineinander gesteckt, wonach die beiden Lenkspindelenden miteinander verschraubt werden. Das Werkzeug in Form eines Zugbandes wird dann abgezogen, d.h. von den Eingriffsmitteln des Einführfortsatzes des einen lenkradseitigen Spindelbauteils getrennt. Aufgrund der engen Bauraumverhältnisse steht der Lenkspindelstrang der Montage des Motormoduls mit der Karosserie normalerweise im Weg, wodurch die Montage zeitaufwändig und verletzungsträchtig wird.

Aus der DE 10 2011 109 691 A1 ist eine Lenkungsanordnung bekannt, bei der ein oberes Lenkspindelbauteil mit der Lenkungskupplung über ein an der Lenkungskupplung angeordnetes Zwischenstück mittels einer axial ausgerichteten Feder-Nut-Verbindung zusammengesteckt werden, wobei eine mit dem Zwischenstück wirkverbundene Druckfeder das Zwischenstück und damit die Lenkungskupplung mit dem Ende des oberen Lenkspindelbauteils verspannt. Das Lenkspindelbauteilende wird dabei in das Zwischenstück axial verfahren, welches dann gegen die Druckfederkraft zum Lenkspindelbauteilende hin verschoben wird und an einem von einer Ringnut gebildeten Hinterschnitt des Lenkspindelbauteilendes eingehakt wird. Die Montage der Lenkspindelbauteile, also Lenkungskupplung und oberes Lenkspindelbauteil, miteinander erfordert keine Schraubwerkzeuge und kann ohne großen Kraftaufwand ausgeführt werden. Die richtige Relativlage der beiden Lenkspindelbauteile wird durch eine oder mehrere optische Markierungen vom Monteur erkannt, so dass Falschlagen bei der Montage ausgeschlossen sind. Bei besonders engen Bauräumen ist jedoch die optische Markierung nur schwer zu erkennen, weshalb in diesen Fällen die Montage erschwert ist.

Die DE10 2011 109 705A1offenbart den Oberbegriff des unabhängigen Anspruchs 1 und zeigt eine Lenkungsanordnung und in Bezug auf den unabhängigen Anspruch 9 deren Montage, bei der eine Lenkspindel mit einer Lenkungskupplung in Form einer Steckverbindung nach einem keilförmigen Nut-Feder-Führungspaar-Prinzip verbunden und dann verspannt wird. Diese Anordnung beinhaltet eine Zuordnungseinrichtung, die drei unterschiedlich geformte Konturelemente aufweist, die radial einwärts ragen. Diese korrespondieren mit formnegativen Konturelementen von Stegen, die von einem endseitigen Zapfen der Lenkspindel radial nach außen abragen. Hierdurch soll eine Fehlstellung der beiden Lenkungsbauteile zueinander vermieden und dem Werker das Einfädeln der Lenkspindel erleichtert werden.

Ausgehend von diesem Stand der Technik ergibt sich die Aufgabe, eine Kraftfahrzeuglenkung zu schaffen, bei der zwei Lenkspindelbauteile, insbesondere ein motoraumseitiges Spindelbauteil und die nachfolgende Lenkungskupplung mit geringem Aufwand auch bei optischer Unzugänglichkeit miteinander verbunden werden können.

Diese Aufgabe wird durch eine Kraftfahrzeuglenkung mit den Merkmalen des Anspruchs 1 gelöst.

Weiterbildungen der Vorrichtung sind in den Unteransprüchen ausgeführt.

Ferner ergibt sich die Aufgabe, ein hinsichtlich der Ausführungsqualität und -geschwindigkeit verbessertes Montageverfahren für Kraftfahrzeuglenkungen bereitzustellen.

Diese Aufgabe wird durch ein Montageverfahren für eine Kraftfahrzeuglenkung mit den Merkmalen des Anspruchs 9 gelöst.

Eine erste Ausführungsform bezieht sich auf eine Kraftfahrzeuglenkung, die eine Lenksäule mit einer Lenkspindel aufweist, die mehrere drehfest miteinander verbundene Lenkspindelbauteile beinhaltet. Das Lenkspindelende des einen Lenkspindelbauteils besitzt am Außenumfang ein in Axialrichtung orientiertes Keilwellenprofil und ist damit in ein hülsenförmiges Zwischenstück eingeführt, das am anderen in Längsrichtung der Lenkspindel angrenzenden Lenkspindelbauteil, insbesondere die Lenkungskupplung angeordnet ist. Das Zwischenstück weist am Innenumfang ein zum Keilwellenprofil des Spindelbauteils formnegatives Keilwellenprofil auf. Das eine Spindelbauteil ist durch das Ineinandergreifen der beiden Keilwellenprofile mit dem Zwischenstück und dadurch mit dem anderen Spindelbauteil steckverbunden. Mit anderen Worten trägt das andere Lenkspindelbauteil das Zwischenstück. Am Spindelbauteil ist eine zum Zwischenstück weisende umlaufende Führungskontur ausgebildet, die dem Keilwellenprofil zum Zwischenstück hin vorgelagert und von den Nuten des Keilwellenprofils unter Bildung von konvexen Führungssegmenten durchbrochen ist.

Die Führungskontur kann ein integraler Bestandteil des dem Zwischenstück gegenüber liegenden Spindelbauteils sein, oder es kann sich dabei um ein mit diesem Spindelbauteil gefügtes separates Bauteil handeln. Die Führungskontur ist erfindungsgemäß in einem Randbereich der Stirnfläche des Endes des Spindelbauteils angeordnet, wobei die Führungskontur in einer Draufsicht auf diese Stirnfläche ein Kreisring sein kann. In der Abwicklung der Mantelfläche des Spindelbauteilendes bzw. der Führungskontur wird die Führungskontur endseitig von einem mehrfach sanft gebogenen bzw. ondulierten gedachten Kurvenzug begrenzt, der zumindest einen Tiefpunkt (d. h. eine Auswölbung) und einen Hochpunkt (d. h. eine Einwölbung) aufweist. Die Auswölbungen bzw. Einwölbungen können in sich symmetrisch sein, so dass in Stecklage die Längsachsen der Zähne des Keilwellenprofils des Zwischenstücks durch die "virtuellen" Scheitelpunkte (Einwölbungen) und die Längsachsen der Nuten durch die tatsächlich vorhandenen Scheitelpunkte (Auswölbungen) der Führungskontur des Spindelbauteils verlaufen. Im Fall der Einwölbungen sind die Scheitelpunkte nicht tatsächlich vorhanden (d. h. nur im Sinne eines konstruktiven Hilfspunktes zu verstehen), da sie im Bereich der Nut(en) des Keilwellenprofils des Spindelbauteils liegen.

Die Führungskontur soll beim in-Kontakt-Bringen des Spindelbauteils mit dem Zwischenstück dabei helfen, die genaue und einzig richtige Winkelposition, in der die beiden Keilwellenprofile in Eingriff gebracht werden können, einfacher zu finden. Die Wölbungen der Führungskontur sind dabei so ausgebildet, dass sich diese nicht mit gegenüberliegenden Zähnen des Keilwellenprofils des Zwischenstücks verhaken können, sondern bei relativem Verdrehen der beiden Bauteile sanft auf den Oberseiten der Zähne des Keilwellenprofils des Zwischenstücks abgleiten. Dabei wird die Auflage auf der Führungskontur von Zahn zu Zahn übergeben, bis die korrekte Winkelposition zum in-Eingriff-Bringen erreicht ist. Dieser Vorgang des Abgleitens der Führungskontur auf den Oberseiten (bzw. teilweise auf den Flanken) der Zähne ist mit dem Abgleiten eines Taststifts auf einer Kurvenscheibe zu vergleichen, wobei die Führungskontur durch die charakteristischen Wölbungen beim Verdrehen des Spindelbauteils um seine Längsachse oder beim Verdrehen des Zwischenstücks um dessen Längsachse eine oszillierende Axialbewegung ausführt. Die Führungskontur ist erfindungsgemäß so gestaltet, dass der axiale Abstand des einen Spindelbauteils vom Zwischenstück des anderen Spindelbauteils (Lenkungskupplung) in der Eingriffsposition minimal ist, was ein Monteur wiederum auch taktil erfassen kann. Das Spindelbauteil kann in axialer Richtung verschoben werden, um bei der Montage mehr Bewegungsfreiheit zu haben, und zudem auch in der endgültigen montierten Position arretiert, z. B. verspannt werden.

Die erfindungsgemäße Ausgestaltung des Endes des Lenkspindelbauteils vereinfacht es einem Monteur bedeutend, dieses in das Zwischenstück der Lenkungskupplung einzuführen, da die Lenkungskupplung in der Regel in einem zerklüfteten manuell schwer zu erreichenden Bereich im Motorraum (auch optisch sehr schlecht zugänglich) eines Kraftfahrzeugs angeordnet ist und es bisher sehr schwierig war, die korrekte Relativlage des einen Lenkspindelbauteils zur Lenkspindelkupplung rein durch Ertasten festzustellen. Mit der vorliegenden Erfindung kann ein Monteur das Ende des Lenkspindelbauteils mit dem Zwischenstück ohne hakeliges Verklemmen zusammenführen und dabei taktil erfassen, ob es sich in der vorbestimmten Montageposition befindet.

In einer weiteren Ausführungsform kann des Keilwellenprofils asymmetrisch sein, wobei die Zahnabstände, die Zahnbreiten und/oder die Zahntiefen des Keilwellenprofils unterschiedlich sein können. Ferner kann die Führungskontur bzw. die Führungsegmente eine zu dem Zwischenstück geöffnete Hinterschneidung aufweisen.

Durch ein derartiges asymmetrisch ausgebildetes Keilwellenprofil wird erlaubt, das eine Spindelbauteil nur in genau einer vorbestimmten Winkelposition in das Zwischenstück der Lenkungskupplung einzuführen, wodurch es ermöglicht wird, dass die Winkelposition der Lenkungskupplung exakt mit einer vorbestimmten Lenkradstellung übereinstimmt. Gemäß einem Poka-Yoke-Prinzip wird die Montage dadurch vereinfacht und es werden Fehlerquellen beseitigt. Hierdurch kann Nacharbeit, die eine Geradeausrichtung des Lenkrads umfasst, eingespart werden. Darüber hinaus können einzelne Zahn-Nuten-Paare der Keilwellenprofile einseitig verjüngt ausgebildet werden, um so eine effektive Zentrierung des der Lenksäule zugeordneten Spindelbauteils während des Einführens in das Zwischenstück zu erreichen.

In einer weiteren Ausführungsform kann das der Lenksäule zugeordnete Spindelbauteil zumindest an seinem Lenkspindelende hohl sein, wobei das Zwischenstück an einer dem Spindelbauteilende zugewandten Stirnseite zumindest einen radial nach innen ragenden zungenförmigen Vorsprung aufweist, der in das Keilwellenprofil des der Lenksäule zugeordneten Spindelbauteils eingreift und bevorzugt um einen vorbestimmten Betrag nach oben aufgestellt, insbesondere gebogen ist.

Mit "oben" ist hierbei die Richtung gemeint, die zum Ende des der Lenksäule zugeordneten Spindelbauteils weist. Der jeweilige zungenförmige Vorsprung soll die Montage noch weiter erleichtern, indem dieser bereits, bevor das Keilwellenprofil des Lenkspindelbauteilendes in das Keilwellenprofil des Zwischenstücks eingreift, in Kontakt bzw. in Eingriff mit der Führungskontur gebracht werden kann. Das bedeutet, dass der Vorgang des Angleichens der Winkelpositionen von Spindelbauteil und Lenkungskupplung bereits dann beginnen kann, wenn beide Bauteile noch einen vorbestimmten axialen Abstand zueinander haben.

Das Poka-Yoke-Prinzip kann auch bei einem symmetrischen Keilwellenprofil dadurch erfüllt werden, dass eine zusätzliche axial verlaufende Nut sowohl an der Außenseite eines einzigen bestimmten Zahnes des Keilwellenprofils des der Lenksäule zugeordneten Spindelbauteils als auch fluchtend im sich anschließenden Führungssegment ausgebildet ist. Diese zusätzliche Nut hat ihre funktionale Entsprechung in einem formnegativ ausgebildeten zusätzlichen Zahn des Keilwellenprofils des Zwischenstücks. Des Weiteren muss zur Gewährleistung des Prinzips ein zungenförmiger Sondervorsprung am Zwischenstück ausgebildet sein, dessen Breite kleiner ist als die Nutbreite der zusätzlichen Nut. Somit kann nur eine einzige Relativstellung der Spindelbauteile zueinander zu einem Eingriff der Keilwellenprofile ineinander führen, wodurch eine absolut eindeutige korrekte Montagelage erzielt wird.

Die Herstellung des zungenförmigen Vorsprungs ist besonders leicht zu realisieren, wenn das Zwischenstück beispielsweise ein tiefgezogenes und gestanztes Blechteil umfasst, wobei der zungenförmige Vorsprung leicht nach oben weisend heraus gebogen werden kann. Natürlich ist es auch möglich, dass es sich bei dem der Lenksäule zugeordneten Spindelbauteil um eine gänzlich hohle Welle handelt, beispielsweise um eine teleskopierbare Hohlwelle. Es ist zudem zweckmäßig, wenn pro Zahn des Keilwellenprofils des Zwischenstücks ein zungenförmiger Vorsprung vorhanden ist, wobei diese Vorsprünge bevorzugt der Gestaltung des Keilwellenprofils in Abstand, Tiefe und Breite folgen. In Kombination mit einer zumindest partiellen Hinterschneidung der Führungssegmente an der dem Zwischenstück zugewandten Stirnfläche ergibt sich mit den ausgebogenen Zungen eine ideale Führung und Zentrierung der Führungssegmente und damit dem der Lenksäule zugeordneten Spindelbauteil beim Einführen. Aufgrund der Hinterschneidung besteht dann nur ein Linienkontakt zwischen dessen einem Ende und den Zungen des Zwischenstücks.

Alternativ oder zusätzlich kann sich zumindest von der Führungskontur des Spindelbauteils aus in einer dem Zwischenstück zugewandten Richtung koaxial ein Einführfortsatz erstrecken, der beim Zusammenstecken der beiden Spindelbauteile in das Zwischenstück eingeführt ist.

Der Einführfortsatz ist also am Ende des Spindelbauteils, in Richtung des Zwischenstücks gesehen, im Wesentlichen vor der Führungskontur angeordnet. Dieser dient dazu, bei der Montage bereits, bevor die zungenförmigen Vorsprünge in Kontakt bzw. in Eingriff mit der Führungskontur sind, das der Lenksäule zugeordnete Spindelbauteil radial grob auf das Zwischenstück auszurichten, damit ein Monteur die Montage auch in der kaum einsehbaren, vergleichsweise schlecht zugänglichen Umgebung sicher und schnell durchführen kann. Der Einführfortsatz kann an seinem freien Ende ferner eine Fase aufweisen, die das Einführen noch weiter erleichtert. Der Durchmesser des Einführfortsatzes kann in Abhängigkeit des zu erreichenden Vorführungsgrades um einen vorbestimmten Betrag kleiner als der Innendurchmesser der Verzahnung des Zwischenstück-Keilwellenprofils gewählt werden.

Gemäß einer alternativen Ausführungsform können zumindest die Führungskontur und/oder der Einführfortsatz Teil eines Kunststoffstopfens sein, der lösbar mit dem Spindelbauteil verbunden ist.

In dieser Ausführungsform sind die Führungskontur und/oder der Einführfortsatz nicht integraler Teil des Spindelbauteils, sondern Teil eines separaten Bauteils, das mit dem Spindelbauteil verbunden ist. Kunststoff ist hier besonders vorteilhaft, da dieser einen geringen Reibungskoeffizient auf Metallen aufweist und auch beim ungeschmierten Abgleiten keine Oberflächenbeschädigungen in Form von Kratzern hinterlässt. Daneben ist es auch denkbar, dass die Führungskontur und/oder der Einführfortsatz als eine Art Bundhülse an das Spindelbauteilende angespritzt oder aufvulkanisiert sind.

Ferner kann der Kunststoffstopfen einen sich in axialer Richtung zum Spindelbauteil hin erstreckenden Verbindungsfortsatz aufweisen, der in das Ende des hohlen Spindelbauteils gesteckt ist, wobei der Verbindungsfortsatz bevorzugt eine umlaufende Dichtung, besonders bevorzugt eine Profildichtung, ein O-Ring oder eine Dichtungslippe, trägt.

Der Verbindungsfortsatz wird dabei in das hohle Ende des Lenkspindelbauteils gesteckt und dient primär der sicheren Befestigung des Kunststoffstopfens, insofern dieser nicht angespritzt ist. Ferner kann ein solcher Verbindungsfortsatz dazu beitragen, die Abdichtung der Spindelbauteils zu verbessern, woraus sich eine verbesserte Korrosionsbeständigkeit für das Spindelbauteil ergibt. Überraschenderweise konnte unter Verwendung des Verbindungsfortsatzes aber auch eine deutliche Reduzierung des Schallpegels im Innenraum des Kraftfahrzeugs erreicht werden, da der Verbindungsfortsatz das in der Regel hohle Spindelbauteil akustisch weitestgehend verschließt.

Der Verbindungsfortsatz kann ferner hohl sein und das Innere des Verbindungsfortsatzes kann bevorzugt ein Spreizmittel, besonders bevorzugt ein Spreizniet, aufweisen.

Das Spreizmittel dient der Befestigung des Verbindungsfortsatzes im hohlen Ende des Spindelbauteils. Dabei wird der Kunststoffstopfen mit dem Verbindungsfortsatz zur Montage in das hohle Ende eingeführt und das Spreizmittel dann ausgelöst. Alternativ kann der Verbindungsfortsatz aber auch klassisch eingepresst sein, wozu allerdings unter Umständen eine geeignete Pressvorrichtung nötig ist.

Eine weitere alternative Ausführungsform bezieht sich darauf, dass der Einführfortsatz hohl ist und auf einer inneren Mantelfläche zumindest ein Eingriffsmittel, bevorzugt eine umlaufende Eingriffsrippe, vorliegt, das dazu ausgebildet ist, in Eingriff mit einem Montagehilfswerkzeug gebracht zu werden.

Hohl soll hier auch bedeuten, dass das dem Zwischenstück zugewandte Ende des Einführfortsatzes offen ist. Die Eingriffsrippen sollen dabei die Kraftübertragung vom Montagehilfswerkzeug auf den Kunststoffstopfen optimieren und ein Abrutschen des Montagehilfswerkzeugs verhindern. Das Montagehilfswerkzeug kann bei der Montage in dem Einführfortsatz verklemmt, verhakt oder verspannt werden, je nachdem was sinnvoll erscheint. Um die Montagesicherheit weiter zu erhöhen, können in dem Einführfortsatz auch drei oder mehr Eingriffsrippen vorhanden sein.

Das Montageverfahren für eine erfindungsgemäße Kraftfahrzeuglenkung unter Verwendung eines Montagehilfswerkzeugs, wobei das Montagehilfswerkzeug einen Eingriffsabschnitt, der mit korrespondierenden Eingriffsmitteln eines Einführfortsatzes in Eingriff bringbar ist, und eine mittels eines Verbindungsmittels damit verbundene Handhabe aufweist, umfasst die folgenden Schritte:
- Bereitstellen und definiertes Positionieren zweier Lenkspindelbauteile zueinander, vorzugsweise ein der Lenksäule zugeordnetes Spindelbauteil und die Lenkungskupplung,
- Verbinden des Eingriffsabschnitts des Montagehilfswerkzeugs mit den Eingriffsmitteln des Einführfortsatzes des der Lenksäule zugeordneten Spindelbauteils,
- Bewegen des Montagehilfswerkzeugs mit dem Spindelbauteil in einer zum anderen Spindelbauteil (Lenkungskupplung) hin weisenden Richtung, bis das Spindelbauteil dicht an das Zwischenstück heran geführt ist,
- Anschließendes Trennen des Montagehilfswerkzeugs von den Eingriffsmitteln des Einführfortsatzes des der Lenksäule zugeordneten Spindelbauteils in einem vorbestimmten Abstand von der Lenkungskupplung,
- Danach relatives Verdrehen des der Lenksäule zugeordneten Lenkspindelbauteils und des Zwischenstücks entlang einer von konvexen Führungselementen gebildeten Führungskontur des Spindelbauteils, bis die Keilwellenprofile zum Eingriff bereit stehen,
- Einführen des Lenkspindelbauteilendes in das Zwischenstück bis zu einer vorbestimmten Endposition.

Da das der Lenksäule zugeordnete Spindelbauteil als Teil einer ausziehbaren Lenksäule in der Regel in zusammengeschobenem Zustand in einen Kraftfahrzeug-Rohbau montiert wird, ist die Verwendung des erfindungsgemäßen Montagehilfswerkzeugs mit einer enormen Arbeitserleichterung verbunden. Das Werkzeug wird zur Kraftübertragung mit dem Lenkspindelbauteilende gekoppelt und dann in Richtung der Lenkungskupplung geführt, wobei die Lenkspindelbauteil beispielsweise in dem Schiebesitz verschoben wird. Ist das Lenkspindelbauteilende in dem vorbestimmten (vergleichsweise kleinen) Abstand von der Lenkungskupplung angelangt, so kann das Montagehilfswerkzeug getrennt werden und der Monteur kann ohne sich verrenken zu müssen, also ergonomisch vorteilhaft, das Spindelbauteil mit dem Zwischenstück verbinden, wie es oben beschrieben ist.

Diese und weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine perspektivische Ansicht eines einer Lenksäule zugeordneten Spindelbauteils mit aufgesetztem Kunststoffstopfen,
- Fig. 2: eine perspektivische Ansicht der Verbindung des der Lenksäule zugeordneten Spindelbauteils aus Fig. 1 mit einer Lenkungskupplung,
- Fig. 3: einen Längsschnitt des Kunststoffstopfens aus Fig. 1,
- Fig. 4: eine perspektivische Ansicht des der Lenksäule zugeordneten Spindelbauteils aus Fig. 1 mit angekoppeltem Montagehilfswerkzeug.

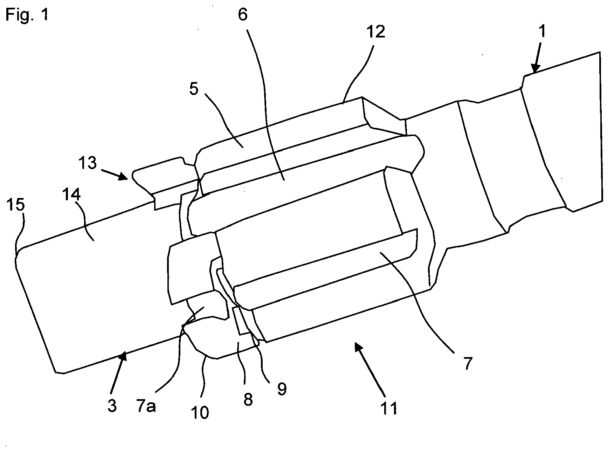

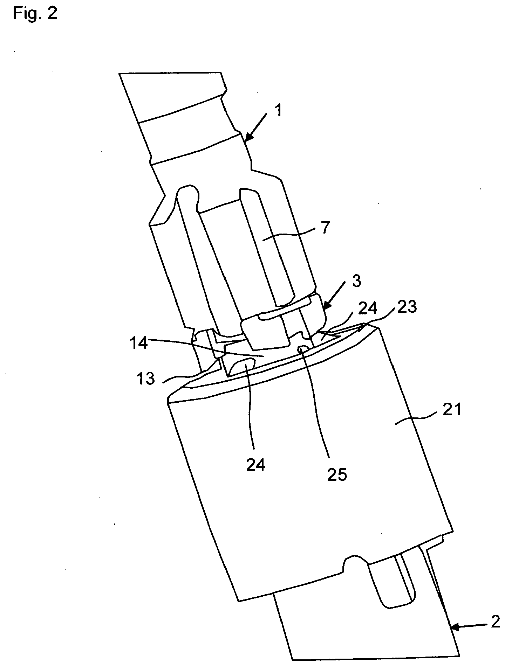

Der in Fig. 1 dargestellte Stumpf eines einer Lenksäule zugeordneten Spindelbauteils 1 zeigt jenes Ende 11, das bei einer zusammengebauten Kraftfahrzeuglenkung mit der Lenkungskupplung 2 (Fig. 2) mittels eines von dieser getragenen hülsenförmigen Zwischenstücks 21 verbunden ist. An ihrem Ende 11 weist das Spindelbauteil 1 ein Keilwellenprofil 12 auf, mit gleichen Zahnabständen und Zahntiefen als auch Zahnbreiten, was dazu führt, dass das Spindelbauteil 1 relativ einfach zu fertigen ist. Das Keilwellenprofil 12 besteht aus Zähnen 5 und Nuten 6, die jeweils in Höhenrichtung (gemeint ist hier die Dickenrichtung) einen konischen Verlauf haben und sich zum Ende 11 des Lenkspindelbauteils 1 hin verjüngen. Das Zwischenstück 21 weist innenseitig ebenfalls ein Keilwellenprofil auf, welches zum Keilwellenprofil 12 des Spindelbauteils 1 formnegativ ausgebildet ist. Das Keilwellenprofil des Zwischenstücks ist ebenfalls in Höhenrichtung konisch mit gleichem Kegelwinkel ausgestaltet, wobei jedoch der Konus sich zum Spindelbauteil 1 hin öffnet. Hierdurch wird beim Zusammenbau der beiden Spindelbauteile 1 und 2 eine Keilklemmkraft ausgenutzt, die einen besonders guten Halt der beiden Bauteile 1 und 2 aneinander erzielt. Dies erhält eine noch größere Bedeutung, da im Zwischenstück 21 eine druckfederbasierte Spannvorrichtung integriert ist, die in Endlage der Steckverbindung ihre Wirkung entfaltet und die beiden Bauteile aufeinander zieht, wodurch die Keilklemmkraft sehr groß wird. Zudem können die Zähne 5 und die Nuten 6 in Breitenrichtung konisch ausgebildet sein, wobei sich die Nuten 6 zum Ende 11 der Lenkspindel öffnen und die Zähne 5 sich verjüngen. Das Keilwellenprofil des Zwischenstücks 21 ist entsprechend formnegativ ausgebildet, so dass sich beim Zusammenstecken der beiden Bauteile 1 und 2 auch in dieser Hinsicht eine quer zur Steckrichtung wirkende Keilklemmkraft einstellt.

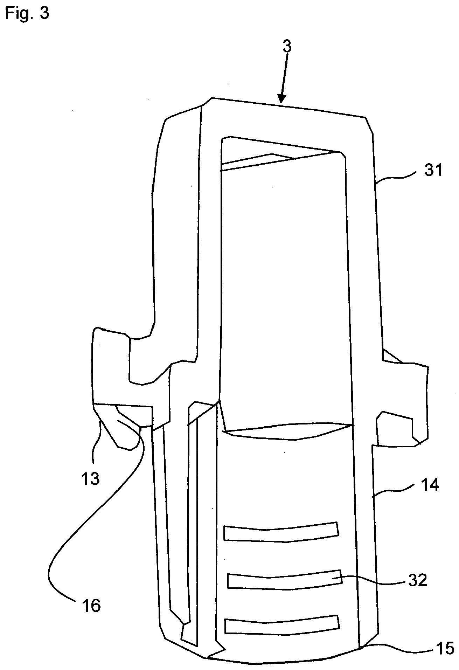

Endseitig dem Keilwellenprofil 12 des Spindelbauteils 1 in Richtung des Zwischenstücks 21 vorgelagert ist ein Kunststoffstopfen 3 zu erkennen, der neben einem Einführfortsatz 14 eine Führungskontur 13 aufweist (siehe auch Fig. 3). Der Einführfortsatz 14 ist an seiner endseitigen Stirnfläche mit einer geringen aber wirksamen Fase 15 versehen, die dabei helfen soll, während der Montage die Zentrierung des Kunststoffstopfens 3 und damit des Spindelbauteils 1 in einer zugeordneten Aufnahme, hier dem Zwischenstück 21 der Lenkungskupplung 2 zu verbessern. Die Nuten 6 des Keilwellenprofils 12 erstrecken sich axial durch die Führungskontur 13, die an der dem Lenkspindelbauteil 1 abgewandten Unterseite eines Ringbundes 8 ausgebildet ist, hindurch bzw. durchbrechen sie unter Bildung von Führungssegmenten 10 axial. Der Ringbund 8 bildet dabei mit seiner Oberseite 9 die Anlagefläche zwischen Kunststoffstopfen 3 und Spindelbauteil 1 und schließt mit dem Keilwellenprofil 12 weitgehend bündig ab. Würde man die Abwicklung der Führungskontur 13 betrachten, so sähe man einen wellenförmigen Kurvenzug, der die Führungskontur 13 an der der Anlagefläche abgewandten Seite begrenzt. Bei dem begrenzenden Kurvenzug können die aus- oder eingewölbten Abschnitte jeweils in sich symmetrisch sein, wobei durch die Scheitelpunkte der eingewölbten Abschnitte die Längsachsen der Nuten 6 des Keilwellenprofils 12 verlaufen und durch die Scheitelpunkte der ausgewölbten bzw. eingewölbten Abschnitte entweder die Längsachse einer Nut 6 oder eines Zahns 5 des Keilwellenprofils 12 läuft. Die Führungskontur 13 ist dazu ausgebildet, bei der Montage des Lenkspindelbauteils 1, die in der Regel in einem engen, d. h. visuell und taktil kaum zugänglichen Bereich liegt, zu erleichtern. Gemäß dem Funktionsprinzip von Kurvenscheibe und Taststift ermöglicht sie es dem Monteur, taktil die korrekte Winkellage zu erfassen.

In einer nicht figurativ dargestellten Ausführungsform können der Einführfortsatz 14 und die Führungskontur 13 grundsätzlich auch integrale Bestandteile des Lenkspindelbauteils 1 sein, was jedoch mit erhöhten Kosten für die Bearbeitung des Lenkspindelbauteils 1 verbunden wäre, das meist aus Metall gefertigt ist. Ein erfindungsgemäßes Kunststoffteil ist an dieser Stelle besonders vorteilhaft, da dieses selbst mit komplexen Formen sehr kostengünstig hergestellt werden kann, beispielsweise durch Spritzgießen.

Zur Montage des Lenkspindelbauteils 1, die meist als Teil einer teleskopierbaren Lenksäule selbst auch teleskopierbar ist, mit der Lenkungskupplung 2 wird das Lenkspindelende 11 des Spindelbauteils 1 ganz dicht an den Bereich der Lenkungskupplung 2 heran geführt, der zur Aufnahme des Lenkspindelbauteils 1 bestimmt ist, nämlich an das Zwischenstück 21. Eine solche Position kurz vor dem Einführen des Lenkspindelbauteils 1 in das Zwischenstück 21 ist in Fig. 2 dargestellt.

In Fig. 2 ist gut zu sehen, wie der Einführfortsatz 14 des der Lenksäule zugeordneten Spindelbauteils 1 bzw. des Kunststoffstopfens 3 teilweise in die Lenkungskupplung 2 ragt. Ferner ist das Zwischenstück 21 als Teil der Lenkungskupplung 2 dargestellt, das an der Lenkungskupplung 2 beweglich gehalten ist. Im Inneren des im Wesentlichen zylindrischen Zwischenstücks 21 sind die Zähne des Keilwellenprofils ausgebildet, die in einer gefügten Lage mit Nuten 6 des Keilwellenprofils 12 des Spindelbauteils 1 in Eingriff gebracht sind. An einer dem Spindelbauteil 1 zugewandten Stirnseite 23 des Zwischenstücks 21 sind radial nach innen ragende Vorsprünge 24, die als Zungen 24 ausgebildet sind, angeordnet. Ferner sind die Zungen 24 auch ein Stück weit nach oben, d. h., in Richtung des Spindelbauteils 1, ausgebogen, was auch fertigungstechnisch leicht umzusetzen ist, da das Zwischenstück 21 zumindest teilweise z. B. mittels Tiefziehen und Stanzen eines Blechs hergestellt werden kann. Soll das Spindelbauteil 1 nun bestimmungsgemäß operativ mit der Lenkungskupplung 2 gekoppelt werden, so wird das Spindelbauteil 1 noch näher an das Zwischenstück 21 der Lenkungskupplung 2 heran geführt, bis der Bund 8 mit der Führungskontur 13 auf den Zungen 24 aufliegt. Passt die relative Winkelposition der beiden Kopplungspartner bereits jetzt, so können die aufeinander geometrisch abgestimmten Keilwellenprofile einfach ineinander gleiten.

Im Falle, dass sich die einzelnen Zähne/Nuten 5,6 des Keilwellenprofils 12 und damit auch des Keilwellenprofils des Zwischenstücks 21 hinsichtlich Breite, Abstand und Tiefe unterscheiden, ist es möglich, durch dieses asymmetrische Keilwellenprofil 12 das Spindelbauteil 1 gemäß dem Poka-Yoke-Prinzip nur in genau einer Winkelposition mit einer Lenkungskupplung zu koppeln. Beim Einbau des Spindelbauteils 1 bzw. der Lenkungskupplung 2 in einen Kraftfahrzeug-Rohbau ist dies vorteilhaft, da so der Verbau nur in einer einzigen Winkellage von Lenkungskupplung 2 und Spindelbauteil 1 - mit dem das Lenkrad gekoppelt ist - zueinander möglich ist, die zu einer Geradeaus-Stellung des Lenkrads führt.

Die Führungskontur 13 hilft dem Monteur hierbei genau diese Winkelposition zu finden. Dazu dreht der Monteur das Lenkspindelbauteil 1 langsam in eine beliebige Umfangsrichtung, wobei die welligen, sanft gewölbten Bereiche der Führungskontur 13, also die Führungssegmente 10 auf den Zungen 24 abgleiten. Da auch die Breiten der Nuten 6 des Keilwellenprofils 12 und die Breiten der Zungen 24 unterschiedlich sind, können sich die Zungen 24 nicht versehentlich in einer falschen Nut verhaken. Gleich einer Kurvenscheibe gleitet die Führungskontur 13 auf den Zungen 24 ab. Der Monteur dreht dann so lange weiter, bis die vorbestimmte Montageposition erreicht ist. In diesem Fall befindet sich die Zunge 24 im Bereich der zugeordneten Einwölbung (wie dargestellt) und wird von den Flanken der Führungskontur 13 so geführt, dass sich die Zunge 24 bei weiter aufgebrachtem leichtem axialen Druck in Richtung des Scheitelpunkts der Einwölbung quasi selbsttätig weiter dreht und dann schließlich das Keilwellenprofil 12 in Eingriff gebracht werden kann. Das Spindelbauteil 1 ist in der Regel ein Hohlwellenbauteil oder es ist zumindest am Zwischenstück 21 zugewandten Ende 11 hohl, um den Kunststoffstopfen 3 erfindungsgemäß aufnehmen zu können, beispielsweise durch Kleben, Pressen, Spreizen.

Das Poka-Yoke-Prinzip ist in gleicher Weise in einer bevorzugten alternativen Ausführungsform erfüllt, wenn das Keilwellenprofil 12 symmetrisch ist. Hierzu erfordert es allerdings einer besonderen Vorkehrung. In einem der Zähne 5 des Lenkspindelbauteils 1 ist dazu in der Außenseite eine axial durchgängig verlaufende geradlinige Nut 7 zusätzlich eingebracht, die einen Abschnitt 7a im Ringbund 8 beinhaltet. Diese Nut 7 wirkt mit einer zusätzlichen an der Stirnseite 23 des Zwischenstücks 21 angeordneten Zunge 25 zusammen. Die Nut 7 und die Zunge 25 weisen dabei eine von den Nuten 6 und den Zungen 24 unterschiedliche Breite auf und/oder sind in Umfangsrichtung der Spindelbauteile 1 und 2 unsymmetrisch zu der Nuten 6 und 24 angeordnet. Hierdurch kann das Keilwellenprofil 12 des Spindelbauteils nur dann in das Zwischenstück 21 und damit in die Lenkungskupplung 2 eingreifen, wenn die Nut 7 und die Zunge 25 einander gegenüber liegen, wobei die Zunge 25 beim Zusammenstecken der Spindelbauteile 1 und 2 in die Nut 7 hineingleitet. Um diese einzige mögliche Stecklage zu finden, geht der Monteur in gleicher Weise vor wie beim vorgenannten alternativen Ausführungsbeispiel.

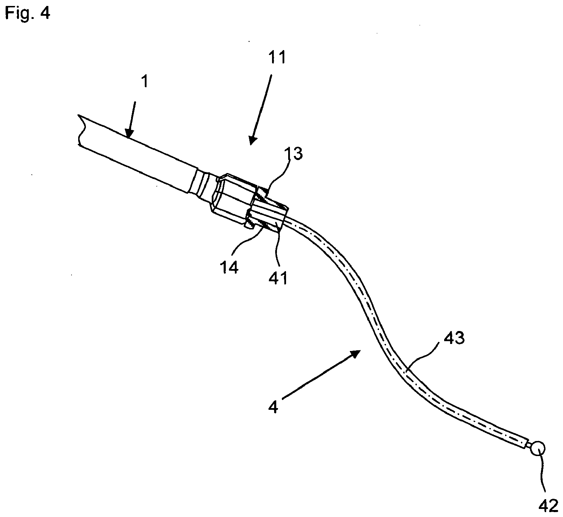

In Fig. 3 ist schließlich der Kunststoffstopfen 3 in einem Längsschnitt zu sehen. Dieser weist einen Verbindungsfortsatz 31 auf, der bestimmungsgemäß in das Lenkspindelbauteilende (das hohl ist) eingeführt werden kann. Zur besseren Fixierung des Verbindungsfortsatzes 31 im Spindelbauteil 1 kann dessen Außendurchmesser etwas größer als der Innendurchmesser der korrespondierenden Bohrung des Lenkspindelbauteils 1 ausgeführt sein. Oder alternativ, was nicht in der Figur dargestellt ist, kann im Inneren ein geeignetes Spreizmittel, beispielsweise ein Spreizniet vorliegen. Der Kunststoffstopfen 3 kann ferner dazu beitragen, die akustische Entkopplung des Motorraums zu verbessern, da ansonsten durch das hohle Lenkspindelbauteil 1 Geräusche aller Art in den Fahrgastraum dringen können. Am anderen Ende hat der Kunststoffstopfen 3 einen Einführfortsatz 14, der bei der Montage des Spindelbauteils 1 mit der Lenkungskupplung 2 beispielweise in ein Zwischenstück 21 (siehe Fig. 2) eintaucht. Hier ist der Einführfortsatz 14 hohl und hat an seinem Ende eine Fase 15, die das Einführen für den Monteur erleichtern und gleichzeitig die Zentrierung verbessern soll. Auf der inneren Mantelfläche sind drei Eingriffsrippen 32 angeordnet, mit denen ein Montagehilfswerkzeug 4 (Fig. 4) zum komfortablen und kraftschonenden Verschieben des Kunststoffstopfens 3 bzw. des mit dem Kunststoffstopfen 3 gekoppelten Spindelbauteils 1 in Eingriff gebracht werden kann. Es können natürlich je nach aufzubringender Kraft auch mehr oder weniger Eingriffsrippen 32 vorhanden sein, oder, was in der Figur nicht gezeigt ist, ganz andere dem Fachmann geeignet erscheinende Eingriffsmittel vorliegen. Ferner ist es auch möglich, aber nicht figurativ gezeigt, dass auf einer (äußeren) Mantelfläche des Verbindungsfortsatzes 31 eine Abdichtung vorhanden ist, die es verhindern soll, dass Feuchtigkeit und Schmutz in das Spindelbauteil 1 eindringen und dort Korrosion verursachen kann.

Die Führungskontur 13 ist ein integraler Bestandteil des Kunststoffstopfens 3 und bildet zusammen mit dem Verbindungsfortsatz 31 und dem Einführfortsatz 14 eine Art "doppelte Bundhülse". Ferner weist die Führungskontur 13 an ihrer dem Einführfortsatz 14 zugewandten Stirnseite eine Hinterschneidung 16 auf, die die Führung der Führungskontur 13 auf den in der Fig. 2 gezeigten Zungen 24 verbessern soll. Die Enden der dort gezeigten Zungen 24 liegen dann in einem Bereich der Hinterscheidung 16 an der Führungskontur 13 an, wodurch quasi nur ein Linienkontakt zwischen beiden Teilen besteht. Zudem wird dadurch aber auch die radiale Führung und Zentrierung des Spindelbauteils 1 am Spindelbauteil 2 verbessert. In diesem Zusammenhang wird auch die Handhabung der Drehbewegung unterstützt, da ein Abrutschen aufgrund der radialen Haltgebung vermieden wird.

Die oben erwähnte Kopplung des Montagehilfswerkzeugs 4 mit dem Einführfortsatz ist in der Fig. 4 dargestellt. Das erfindungsgemäße Montagehilfswerkzeug 4 weist hierzu eine Handhabe 42 auf, die mittels eines Schafts 43 mit einem Eingriffsende 41 verbunden ist. Der Schaft 43 kann aus einem faserverstärkten Kunststoff bestehen. Er kann starr sein oder es kann sich dabei um einen flexiblen Draht oder ein Seil oder eine elastische Seele handeln. Es ist auch möglich, dass der Schaft 43 eine an die Einbausituation im Kraftfahrzeug angepasste Form aufweist, die beispielsweise dazu geeignet ist, das Montagehilfswerkzeug 4 bei Montage von unten ohne Behinderungen durch andere Aggregate im Motorraum einsetzen zu können. Am Eingriffsende 41 weist das Montagehilfswerkzeug 4 mit den Eingriffsmitteln 32 des Einführfortsatzes 14 (siehe Fig. 3) korrespondierende Eingriffsmittel auf, die sich in den Eingriffsmitteln 32 abstützen sollen. Das Eingriffsmittel des Montagehilfswerkzeugs 4 kann aber auch ein einfacher aufblasbarer Ballon oder ein elastischer Balg sein. Mit Hilfe des gezeigten Montagehilfswerkzeugs 4 kann der Monteur eine in zusammengeschobenem Zustand in den Kraftfahrzeug-Rohbau montierte Teleskop-Lenkspindel komfortabel auf ihre dem Montagezustand entsprechende Länge ausziehen, ohne sich dabei der Gefahr von Fingerverletzungen aussetzen zu müssen.

## Patentansprüche

1. Kraftfahrzeuglenkung mit einer aus mehreren drehfest miteinander verbundenen Spindelbauteilen (1,2) bestehenden Lenkspindel, wobei ein Ende (11) eines Spindelbauteils (1) am Außenumfang ein in Axialrichtung orientiertes Keilwellenprofil (12) besitzt und damit in ein hülsenförmiges Zwischenstück (21) eingeführt ist, das am anderen in Längsrichtung der Lenkspindel angrenzenden Spindelbauteil (2) angeordnet ist und am Innenumfang ein zum Keilwellenprofil (12) des Spindelbauteils (1) formnegatives Keilwellenprofil aufweist, so dass das Spindelbauteil (1) mit dem Zwischenstück (21) steckverbunden ist, wobei am Spindelbauteil (1) eine zum Zwischenstück (21) weisende umlaufende Führungskontur (13) ausgebildet ist, die dem Keilwellenprofil (12) zum Zwischenstück (21) hin vorgelagert, **dadurch gekennzeichnet, dass** die Führungskontur (13) von Nuten (6) des Keilwellenprofils (12) unter Bildung von konvexen Führungssegmenten (10) durchbrochen ist.

2. Kraftfahrzeuglenkung nach Anspruch 1,
**dadurch gekennzeichnet, dass**
das Keilwellenprofil (12) asymmetrisch ist, wobei
- die Zahnabstände des Keilwellenprofils (12) unterschiedlich sind und/oder
- die Zahnbreiten des Keilwellenprofils (12) unterschiedlich sind und/oder
- die Zahntiefen des Keilwellenprofils (12) unterschiedlich sind und/oder
- die Führungssegmente (10) der Führungskontur (13) eine zu dem Zwischenstück (21) geöffnete Hinterschneidung (16) aufweist.

3. Kraftfahrzeuglenkung nach Anspruch 1 oder 2,
**dadurch gekennzeichnet, dass**
- das Lenkspindelbauteil (1) zumindest am Ende (11) hohl ist und/oder
- das Zwischenstück (21) an einer dem Ende (11) des Lenkspindelbauteils (1) zugewandten Stirnseite (23) zumindest einen radial nach innen ragenden zungenförmigen Vorsprung (24) aufweist, der in das Keilwellenprofil (12) des Lenkspindelbauteils (1) eingreift und bevorzugt schräg nach oben zum Spindelbauteilende (11) hin aufgestellt ist.

4. Kraftfahrzeuglenkung nach zumindest einem der Ansprüche 1 bis 3,
**dadurch gekennzeichnet, dass**
sich zumindest von der Führungskontur (13) des Lenkspindelbauteils (1) aus in einer dem Zwischenstück (21) zugewandten Richtung koaxial ein Einführfortsatz (14) erstreckt, der von dem Zwischenstück (21) aufgenommen ist.

5. Kraftfahrzeuglenkung **nach Anspruch 4,**
**dadurch gekennzeichnet, dass**
zumindest die Führungskontur (13) und/oder der Einführfortsatz (14) Teil eines Kunststoffstopfens (3) sind, der lösbar mit dem Lenkspindelbauteil (1) verbunden ist.

6. Kraftfahrzeuglenkung **nach Anspruch 5,**
**dadurch gekennzeichnet, dass**
der Kunststoffstopfen (3) einen sich in axialer Richtung hin zu dem Spindelbauteil (1) erstreckenden Verbindungsfortsatz (31) aufweist, der in das Ende (11) des Spindelbauteils (1) gesteckt ist, wobei an dem Verbindungsfortsatz (31) bevorzugt eine umlaufende Dichtung, besonders bevorzugt eine Profildichtung, ein O-Ring oder eine Dichtungslippe, vorliegt.

7. Kraftfahrzeuglenkung nach Anspruch 6,
**dadurch gekennzeichnet, dass**
der Verbindungsfortsatz (31) hohl ist und im Inneren des Verbindungsfortsatzes (31) bevorzugt ein Spreizmittel, besonders bevorzugt ein Spreiznniet, vorliegt.

8. Kraftfahrzeuglenkung nach zumindest einem der Ansprüche 4 bis 7 **dadurch gekennzeichnet, dass**
der Einführfortsatz (14) hohl ist und auf einer inneren Mantelfläche zumindest ein Eingriffsmittel (32), bevorzugt eine umlaufende Eingriffsrippe, vorliegt, das dazu ausgebildet ist, in Eingriff mit einem Montagehilfswerkzeug (4) gebracht zu werden..

9. Montageverfahren für eine Kraftfahrzeuglenkung nach zumindest einem der Ansprüche 1 bis 7 unter Verwendung eines Montagehilfswerkzeugs (4), **das einen Eingriffsabschnitt (41), der mit korrespondierenden Eingriffsmitteln des Einführfortsatzes (14) nach Anspruch 4 in Eingriff bringbar ist, und eine mittels eines Verbindungsmittels (42) damit verbundene Handhabe (43) aufweist,** umfassend die Schritte:
- Bereitstellen und Positionieren zweier Lenkspindelbauteile (1,2) zueinander,
- Verbinden des Eingriffsabschnitts (41) des Montagehilfswerkzeugs (4) mit den Eingriffsmitteln (32) des Einführfortsatzes (14) des Spindelbauteils (1),
- Bewegen des Montagehilfswerkzeugs (4) **mit dem Spindelbauteil (1)** in einer zum Spindelbauteil (2) hin weisenden Richtung, **bis das Spindelbauteil (1) dicht an das Zwischenstück (21) heran geführt ist,**
- **anschließendes** Trennen des Montagehilfswerkzeugs (4) von den Eingriffsmitteln (32) des Einführfortsatzes (14) des Spindelbauteils (1),
- **danach** relatives Verdrehen des Spindelbauteils (1) und des Zwischenstücks (21) **entlang einer von konvexen Führungssegmenten (10) gebildeten Führungskontur (13) des Spindelbauteils (1)**, bis deren Keilwellenprofile (12) zum Eingriff bereit stehen, **und schließlich**
- Einführen des Endes (11) des Spindelbauteils (1) in das Zwischenstück (21) bis zu einer vorbestimmten Endposition.

## Claims

1. Motor vehicle steering system comprising a steering shaft consisting of several shaft components (1, 2) non-rotatably connected to one another, wherein one end (11) of a shaft component (1) has on its outer circumference a splined shaft profile (12) oriented in the axial direction and is thereby inserted into a sleeve-shaped intermediate piece (21), which is located on the other shaft component (2) adjoining it in the longitudinal direction of the steering shaft and having on its inner circumference a splined shaft profile with a shape which is a negative of the splined shaft profile (12) of the shaft component (1), so that the shaft component (1) is joined to the intermediate piece (21) by a plug-in connection, wherein a continuous guide contour (13), which points towards the intermediate piece (21) and is located in front of the splined shaft profile (12) towards the intermediate piece (21), is formed on the shaft component (1),
**characterised in that**
the guide contour (13) is broken by grooves (6) of the splined shaft profile (12) while forming convex guide segments (10).

2. Motor vehicle steering system according to claim 1,
**characterised in that**
the splined shaft profile (12) is asymmetric, wherein
- the tooth pitches of the splined shaft profile (12) are different and/or
- the tooth widths of the splined shaft profile (12) are different and/or
- the tooth depths of the splined shaft profile (12) are different and/or
- the guide segments (10) of the guide contour (13) have an undercut (16) which is open towards the intermediate piece (21).

3. Motor vehicle steering system according to claim 1 or 2,
**characterised in that**
- the steering shaft component (1) is hollow at least at the end (11) and/or
- the intermediate piece (21) has at an end face (23) facing the end (11) of the steering shaft component (1) at least one radially inward-projecting tongue-shaped projection (24), which engages with the splined shaft profile (12) of the steering shaft component (1) and is preferably positioned at an angle upwards towards the shaft component end (11).

4. Motor vehicle steering system according to one or more of claims 1 to 3,
**characterised in that**
an insertion extension (14) incorporated into the intermediate piece (21) extends coaxially at least from the guide contour (13) of the steering shaft component (1) in a direction facing the intermediate piece (21).

5. Motor vehicle steering system according to claim 4,
**characterised in that**
at least the guide contour (13) and/or the insertion extension (14) is/are a part of a plastic plug (3) which is releasably joined to the steering shaft component (1).

6. Motor vehicle steering system according to claim 5,
**characterised in that**
the plastic plug (3) has a connecting extension (31), which extends in the axial direction towards the shaft component (1) and is inserted into the end (11) of the shaft component (1), wherein a continuous seal, preferably a profiled seal, an O-ring or a sealing lip in particular, is preferably provided on the connecting extension (31).

7. Motor vehicle steering system according to claim 6,
**characterised in that**
the connecting extension (31) is hollow and an expanding means, preferably a split rivet in particular, is provided in the interior of the connecting extension (31).

8. Motor vehicle steering system according to one or more of claims 4 to 7,
**characterised in that**
the connecting extension (31) is hollow and **in that** at least one engagement means (32), preferably a continuous engagement rib, designed for engagement with an assembly aid (4) is provided on an interior surface.

9. Installation method for a motor vehicle steering system according to one or more of claims 1 to 7, involving the use of an assembly aid (4) comprising an engagement section (41), which can be brought into engagement with corresponding engagement means of the insertion extension according to claim 4, and a handle (43) joined thereto by means of a connecting means (42), comprising the steps of:
- the provision and the relative positioning of two steering shaft components (1, 2),
- the connecting of the engagement section (41) of the assembly aid (4) to the engagement means (32) of the insertion extension (14) of the shaft component (1),
- the movement of the assembly aid (4) with the shaft component (1) in a direction towards the shaft component (2) until the shaft component (1) is guided close to the intermediate piece (21),
- the subsequent separation of the assembly aid (4) from the engagement means (32) of the insertion extension (14) of the shaft component (1),
- the subsequent relative twisting of the shaft component (1) and the intermediate piece (21) along a guide contour (13) of the shaft component (1) formed by convex guide segments (10) until their splined shaft profiles (12) are ready for engagement, and finally
- the insertion of the end (11) of the shaft component (1) into the intermediate piece (21) up to a predetermined end position.

## Revendications

1. Direction de véhicule automobile comprenant un arbre de direction constituée de plusieurs éléments structuraux (1, 2) d'arbre accouplés solidaire en rotation les uns avec les autres, une extrémité (11) d'un élément structural (1) d'arbre comportant sur la périphérie extérieure un profil (12) d'arbre cannelé orienté dans la direction axiale et ainsi est introduit dans un élément intermédiaire (21) en forme de douille, qui est disposé sur l'autre élément structural (2) d'arbre adjacent dans la direction longitudinale de l'arbre de direction et sur la périphérie intérieure présente un profil d'arbre cannelé de forme négative par rapport au profilé (12) d'arbre cannelé de l'élément structural (1) d'arbre de sorte que l'élément structural (1) d'arbre soit relié par emmanchement à l'élément intermédiaire (21), sur l'élément structural (1) d'arbre est formé un contour de guidage (13) périphérique orienté vers l'élément intermédiaire (21), ledit contour étant monté en amont par rapport au profil (12) d'arbre cannelé vers l'élément intermédiaire (21), **caractérisée en ce que** le contour de guidage (13) est interrompu par des rainures (6) du profil (12) d'arbre cannelé de manière à former des segments (10) de guidage convexes.

2. Direction de véhicule automobile selon la revendication 1, le profil (12) d'arbre cannelé est asymétrique,
- les distances entre les dents du profil (12) d'arbre cannelé étant différentes et/ou
- les largeurs entre les dents du profil (12) d'arbre cannelé étant différentes et/ou
- les profondeurs des dents du profil (12) d'arbre cannelé étant différentes et/ou
- les segments de guidage (10) du contour de guidage (13) présentant une contre-dépouille (16) ouverte vers l'élément intermédiaire (21).

3. Direction de véhicule automobile selon la revendication 1 ou la revendication 2, **caractérisée en ce que**
- l'élément structural (1) d'arbre de direction est creux au moins à une extrémité (11) et/ou
- l'élément intermédiaire (21) présente sur l'une face avant (23) orientée vers l'extrémité (11) de l'élément structural (1) d'arbre de direction au moins une partie saillante (24) en forme de languette faisant saillie radialement vers l'intérieur, qui s'insère dans le profil (12) d'arbre cannelé de l'élément structural (1) d'arbre de direction et est monté de préférence obliquement vers le haut par rapport à l'extrémité (11) de l'élément structural d'arbre.

4. Direction de véhicule automobile selon au moins l'une quelconque des revendications 1 à 3, **caractérisée en ce qu'**un prolongement d'insertion (14) s'étend coaxialement au moins depuis le contour (13) de guidage de l'élément structural (1) d'arbre de direction à partir d'une direction orientée vers l'élément intermédiaire (21), ledit prolongement étant logé dans l'élément intermédiaire (21).

5. Direction de véhicule automobile selon la revendication 4, **caractérisée en ce qu'**au moins le contour de guidage (13) et/ou le prolongement d'insertion (14) font partie d'un bouchon (3) en plastique qui est relié amovible à l'élément structural (1) d'arbre de direction.

6. Direction de véhicule automobile selon la revendication 5, **caractérisée en ce que** le bouchon (3) en plastique comporte un prolongement (31) de liaison s'étendant dans la direction axiale vers l'élément structural (1) d'arbre qui est inséré dans l'extrémité (11) de l'élément structural (1) d'arbre, sur le prolongement (31) de liaison est disposée de préférence un joint d'étanchéité périphérique, de préférence encore un joint d'étanchéité de profil, un joint torique ou une lèvre d'étanchéité.

7. Direction de véhicule automobile selon la revendication 6, **caractérisée en ce que** le prolongement (31) de liaison est creux et à l'intérieur du prolongement (31) de liaison est disposé de préférence un moyen extensible, de préférence encore un rivet extensible.

8. Direction de véhicule automobile selon au moins l'une des revendications 4 à 7, **caractérisée en ce que** le prolongement (32) d'insertion est creux et est disposé sur une surface d'enveloppe intérieure au moins un élément (32) d'insertion, de préférence une nervure d'insertion, qui est formé de sorte à être amené à entrer en prise avec un outil (4) d'aide au montage.

9. Procédé de montage pour une direction de véhicule automobile selon au moins une des revendications 1 à 7 faisant appel à un outil (4) d'aide au montage qui comporte une section d'insertion (41) qui peut être mise en prise avec les moyens d'insertion correspondants du prolongement d'insertion (14) selon la revendication 4, et un organe de commande (43) ainsi relié au moyen d'un moyen de liaison (42), comprenant les étapes consistant à :
- produire et positionner deux éléments structuraux (1, 2) d'arbre de direction l'un par rapport à l'autre
- relier la section d'insertion (41) de l'outil (4) d'aide au montage aux moyens d'insertion (32) du prolongement d'insertion (14) de l'élément structural (1) d'arbre,
- déplacer l'outil (4) d'aide au montage conjointement avec l'élément structural (1) d'arbre dans une direction orientée vers l'élément structural (2) d'arbre jusqu'ace que l'élément structural (1) d'arbre soit guidé de manière étanche sur l'élément intermédiaire (21),
- séparer ensuite l'outil (4) d'aide au montage des moyens d'insertion (32) du prolongement (14) d'insertion de l'élément structural (1) d'arbre,
- ensuite rotation relative de l'élément structural (1) d'arbre et de l'élément intermédiaire (21) le long d'un contour de guidage (13) formé par des segments de guidage convexes (10) de l'élément structural (1) d'arbre jusqu'à ce que leurs profils (12) d'arbre cannelé soient déjà en prise, et enfin
- insérer l'extrémité (11) de l'élément structural (1) d'arbre dans l'élément intermédiaire (21) jusqu'à une position finale prédéfinie.
